(19) Europäisches Patentamt / European Patent Office / Office européen des brevets

(11) **EP 2 903 067 A1**

(12) **EUROPEAN PATENT APPLICATION**
published in accordance with Art. 153(4) EPC

(43) Date of publication:
**05.08.2015 Bulletin 2015/32**

(51) Int Cl.:
**H01M 8/02** (2006.01)   **H01M 4/88** (2006.01)
**H01M 8/12** (2006.01)

(21) Application number: **13841577.3**

(22) Date of filing: **27.09.2013**

(86) International application number:
**PCT/JP2013/005796**

(87) International publication number:
**WO 2014/050148 (03.04.2014 Gazette 2014/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.09.2012 JP 2012215369**
**28.09.2012 JP 2012215371**
**21.03.2013 JP 2013057523**

(71) Applicant: **Nippon Shokubai Co., Ltd.**
**Osaka-shi, Osaka 541-0043 (JP)**

(72) Inventors:
• **SHIMOMURA, Masatoshi**
 **Himeji-shi**
 **Hyogo 671-1241 (JP)**
• **FURUSHO, Kazuki**
 **Himeji-shi**
 **Hyogo 671-1241 (JP)**
• **HOSOI, Kohei**
 **Fukuoka 819-0371 (JP)**

(74) Representative: **Hart-Davis, Jason et al**
**Cabinet Beau de Loménie**
**158, rue de l'Université**
**75340 Paris Cedex 07 (FR)**

(54) **HALF CELL FOR SOLID OXIDE FUEL CELLS, AND SOLID OXIDE FUEL CELL**

(57)     A SOFC half cell of the present invention includes: an anode functional layer (11) containing yttria-stabilized zirconia and a conductive component containing a metal oxide that changes to an electrically conductive metal in a reducing atmosphere; and a first electrolyte layer (21) containing yttria-stabilized zirconia as a main component and formed on one principal surface of the anode functional layer (11). The yttria-stabilized zirconia in the anode functional layer (11) has an yttria content of more than 9.00 mol% and 11 mol% or less, and the yttria-stabilized zirconia in the first electrolyte layer (21) has an yttria content of more than 9.00 mol% and 11 mol% or less. This half cell allows the SOFC to exhibit high power generation performance.

FIG.1

EP 2 903 067 A1

**Description**

TECHNICAL FIELD

The present invention relates to a half cell for a solid oxide fuel cell and to a solid oxide fuel cell.

BACKGROUND ART

Fuel cells have recently attracted attention as clean energy sources. Among these fuel cells, solid oxide fuel cells (hereinafter, also referred to as "SOFCs") using solid ceramic materials as electrolytes are expected to be used in a wide variety of applications ranging from domestic power supplies to large-scale power supplies, due to their advantages such as high operating temperatures allowing utilization of waste heat and high efficiency power generation.

A SOFC has a basic structure including a cathode (air electrode), an anode (fuel electrode), and a ceramic solid electrolyte layer disposed between the cathode and the anode. For example, in the case of a planar SOFC, a stack of a cathode, a solid electrolyte layer, and an anode is a unit cell for a SOFC (hereinafter referred to as a "SOFC cell"), and these unit SOFC cells are stacked with interconnectors interposed therebetween to achieve high power output. Such planar SOFCs include electrolyte-supported cells (ESCs) in which an electrolyte is used as a support to maintain the strength of the cell, anode-supported cells (ASCs) in which an anode is used as a support to maintain the strength of the cell, and cathode-supported cells (CSCs) in which a cathode is used as a support. In some cases, for example, a half cell having a unit cell structure without a cathode is provided as a semi-finished product of a SOFC cell.

Patent Literature 1 describes the use of a cermet of nickel and yttria-stabilized zirconia (hereinafter also referred to as "YSZ") for SOFC anodes. Patent Literature 1 also shows, as examples of SOFC electrolyte layers, 3 mol% yttria-stabilized zirconia (3YSZ), 6 mol% yttria-stabilized zirconia (6YSZ), 8 mol% yttria-stabilized zirconia (8YSZ), and 10 mol% yttria-stabilized zirconia (10YSZ).

Patent Literature 2 describes that it is desirable to use an anode material consisting of nickel-zirconia cermet for SOFC anodes. Herein, zirconia stabilized with 3 to 10 wt.% yttria is shown as an example of zirconia.

Patent Literature 3 describes that a Ni-YSZ cermet is selected as a material for anode electrodes for ASCs. Patent Literature 3 also describes the use of, for example, 8 mol% yttria-stabilized zirconia (8YSZ) as a solid electrolyte.

CITATION LIST

Patent Literature

Patent Literature 1: JP 2011-228093 A
Patent Literature 2: JP 2006-505094 T
Patent Literature 3: JP 2012-104407 A

SUMMARY OF INVENTION

Technical Problem

In the documents mentioned above, the relationship between the yttria content in YSZ used for an anode and the yttria content in YSZ used for an electrolyte layer and the power generation performance of a SOFC cell have not been specifically studied.

Under these circumstances, it is an object of the present invention to provide a novel SOFC half cell or a novel SOFC that includes an anode and an electrolyte layer each containing YSZ and has high power generation performance.

Solution to Problem

The present invention provides a half cell for a solid oxide fuel cell including: an anode functional layer containing yttria-stabilized zirconia and a conductive component containing a metal oxide that changes to an electrically conductive metal in a reducing atmosphere; and a first electrolyte layer containing yttria-stabilized zirconia as a main component and formed on one principal surface of the anode functional layer. In this half cell, the yttria-stabilized zirconia in the anode functional layer has an yttria content of more than 9.00 mol% and 11 mol% or less, and the yttria-stabilized zirconia in the first electrolyte layer has an yttria content of more than 9.00 mol% and 11 mol% or less.

The present invention also provides a solid oxide fuel cell including: the above-described half cell for a solid oxide fuel cell; and a cathode formed on an opposite side of the first electrolyte layer from the anode functional layer.

Advantageous Effects of Invention

According to the present invention, in which the yttria content in the YSZ in the anode functional layer and the yttria content in the YSZ in the first electrolyte layer are both more than 9.00 mol% and 11 mol% or less, high power generation performance can be achieved.

BRIEF DESCRIPTION OF DRAWINGS

FIG. 1 is a schematic cross-sectional view of a SOFC half cell according to a first embodiment.
FIG. 2 is a schematic cross-sectional view of a SOFC cell according to the first embodiment.
FIG. 3 is a schematic cross-sectional view of a SOFC cell according to a modification of the first embodiment.
FIG. 4 is a schematic cross-sectional view of a SOFC half cell according to a second embodiment.
FIG. 5 is a schematic cross-sectional view of a SOFC cell according to the second embodiment.
FIG. 6 is a schematic cross-sectional view of a SOFC cell according to a modification of the second embodiment.
FIG. 7 is a graph showing power generation performance of SOFC cells according to Examples 1 to 3 and Comparative Examples 1 to 3.
FIG. 8 is a SEM (scanning electron microscope) photograph of a cross section of a SOFC half cell according to Example 1.
FIG. 9 is a SEM photograph of a cross section of a SOFC half cell according to Comparative Example 1.

DESCRIPTION OF EMBODIMENTS

Hereinafter, embodiments of the present invention will be described with reference to the drawings. The following description relates to exemplary embodiments of the present invention, and the present invention is not limited to these embodiments.

<First Embodiment>

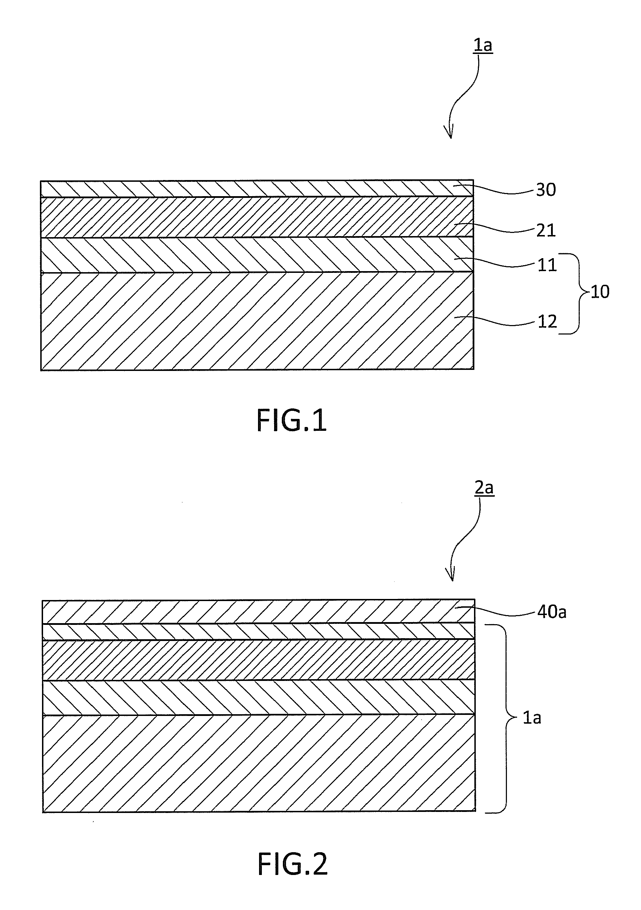

As shown in FIG. 1, a half cell 1a includes an anode 10, a first electrolyte layer 21 formed on one principal surface of the anode 10, and a barrier layer 30 formed on a surface of the first electrolyte layer 21 opposite to the surface thereof in contact with the anode 10. As shown in FIG. 2, a SOFC cell 2a includes the half cell 1a and a cathode 40a formed on the opposite side of the first electrolyte layer 21 from the anode 11.

The anode 10 includes an anode functional layer 11 and an anode support substrate 12. The anode functional layer 11 is a layer containing a conductive component and an electrolyte component as main components, and an electrochemical reaction actually takes place in this layer. The electrolyte component is, in other words, a ceramic skeleton component. Specifically, the anode functional layer 11 is a sintered body obtained by sintering a mixture of a conductive component powder and an electrolyte component powder. The anode support substrate 12 contains a conductive component and an electrolyte component as main components. The anode support substrate 12 serves to introduce a fuel gas such as hydrogen into the anode functional layer 11 and supports the first electrolyte layer 21 and the cathode 40a so as to function as a support for the entire half cell 1a or the entire SOFC cell 2a. That is, the half cell 1a of the present embodiment is an ASC-type half cell. The electrolyte component contained in the anode support substrate 12 is also a ceramic skeleton component. When the anode support substrate 12 is fully functional as an anode, the anode functional layer 11 may be omitted.

Examples of the conductive component contained in the anode functional layer 11 include: metal oxides that change to electrically conductive metals in a reducing atmosphere during the operation of a fuel cell, such as nickel oxide, cobalt oxide, and iron oxide; and composite metal oxides containing two or more of these oxides, such as nickel ferrite and cobalt ferrite. These oxides can be used alone, or two or more of these may be used in combination, as needed. Among these, it is desirable to use nickel oxide, cobalt oxide, or iron oxide.

As the electrolyte component contained in the anode functional layer 11, stabilized zirconia is selected. Specifically, yttria-stabilized zirconia (YSZ) is selected. The yttria content in this YSZ is more than 9.00 mol% and 11 mol% or less. As used herein, the content of "11 mol% or less" includes the content which can be rounded off to "11 mol%" as the nearest whole number. The yttria content in this YSZ is more preferably 9.20 to 10.8 mol%, and even more desirably 9.50 to 10.5 mol%. It is particularly desirable to use stabilized zirconia with 10 mol% yttria (10YSZ) added. It is also possible to use stabilized zirconia with praseodia, neodia, samaria, gadolinia, dysprosia, europia, erbia, ytterbia, or the like added, instead of or in addition to the YSZ having the yttria content mentioned above, as described later. Among these, stabilized zirconia with europia, erbia, or ytterbia added is preferably used.

The content ratio between the conductive component and the electrolyte component contained in the anode functional layer 11 is not particularly limited. The content ratio between the conductive component and the electrolyte component (conductive component: electrolyte component) is, for example, 30:70 to 80:20, preferably 40:60 to 70:30, and more desirably 50:50 to 60:40, in terms of weight percentage. Herein, the content ratio between the conductive component and the electrolyte component is based on the weight of the conductive component before being exposed to a reducing atmosphere.

As the conductive component contained in the anode support substrate 12, the same component as that contained in the anode functional layer 11 is selected. On the other hand, the electrolyte component contained in the anode support substrate 12 is not limited to the same component as that contained in the anode functional layer 11. As the electrolyte component of the anode support substrate 12, zirconia, alumina, magnesia, titania, aluminum nitride, mullite, or the like is used alone or as a composite of these. Among these, the most versatile one is stabilized zirconia. Desired examples of the stabilized zirconia include: solid solutions of zirconia and one or more oxides selected, as a stabilizer or stabilizers, from: alkaline earth metal oxides such as MgO, CaO, SrO, and BaO; rare earth element oxides such as $Sc_2O_3$, $Y_2O_3$, $L_2O_3$, $CeO_2$, $Pr_2O_3$, $Nd_2O_3$, $Sm_2O_3$, $Eu_2O_3$, $Gd_2O_3$, $Tb_2O_3$, $Dy_2O_3$, $Er_2O_3$, $Tm_2O_3$, and $Yb_2O_3$; and $Bi_2O_3$ and $In_2O_3$. Desired examples of the stabilized zirconia also include dispersion-strengthened zirconia, that is, any of the above-mentioned solid solutions in which a dispersion strengthening agent such as alumina, titania, $Ta_2O_5$, or $Nb_2O_5$ is added. It is also possible to use: ceria- or bismuth-based ceramics in which one or more of CaO, SrO, BaO, $Y_2O_3$, $La_2O_3$, $Ce_2O_3$, $Pr_2O_3$, $Nb_2O_3$, $Sm_2O_3$, $Eu_2O_3$, $Gd_2O_3$, $Tb_2O_3$, $Dr_2O_3$, $Ho_2O_3$, $Er_2O_3$, $Yb_2O_3$, PbO, $WO_3$, $MoO_3$, $V_2O_5$, $Ta_2O_5$, and $Nb_2O_5$ is added to $CeO_2$ or $Bi_2O_3$; and even gallate-based ceramics such as $LaGaO_3$. Among these, zirconia stabilized with 2.5 to 12 mol% yttria is desirable. With the objective of increasing the strength of the anode support substrate 12, zirconia stabilized with 2.5 to 6 mol% yttria is preferable, and zirconia stabilized with 2.8 to 5 mol% yttria is more desirable.

The thickness of the anode functional layer 11 is not particularly limited, and it is 5 $\mu$m to 30 $\mu$m, for example. The thickness of the anode support substrate 12 is not particularly limited, and it is 150 $\mu$m to 1500 $\mu$m, for example.

The first electrolyte layer 21 contains an electrolyte component which is also a ceramic material, as a main component. Herein, the "main component" refers to a component having the highest content by weight. Specifically, as in the anode functional layer 11, yttria-stabilized zirconia (YSZ) is selected as the electrolyte component of the first electrolyte layer 21. The yttria content in this YSZ is more than 9.00 mol% and 11 mol% or less. The yttria content in this YSZ is more preferably 9.20 to 10.8 mol%, and even more desirably 9.50 to 10.5 mol%. It is particularly desirable to use stabilized zirconium with 10 mol% yttria (10YSZ) added. It is also possible to use stabilized zirconia with praseodia, neodia, samaria, gadolinia, dysprosia, europia, erbia, ytterbia, or the like added, instead of or in addition to the YSZ having the yttria content in the above-mentioned range, as described later. Among these, stabilized zirconia with europia, erbia, or ytterbia added is preferably used. It is also possible to suitably use a material obtained by adding a sintering aid or a dispersion strengthening agent such as alumina, silica, or titania to this YSZ. In the first electrolyte layer 21, the content of the YSZ having the yttria content in the above-mentioned range is, for example, 95 mass% or more with respect to the first electrolyte layer 21. It is more preferably 97 mass% or more, and even more desirably 99 mass% or more. The first electrolyte layer 21 may consist essentially of the YSZ having the yttria content in the above-mentioned range.

With the objective of obtaining a unit cell for a SOFC (hereinafter referred to as a "SOFC cell") exhibiting high power generation performance, it is recommended that the yttria content in the YSZ contained in the anode functional layer 11 be equal or almost equal to the yttria content in the YSZ in the first electrolyte layer 21. Specifically, when the yttria content in the YSZ contained in the anode functional layer 11 is A mol% and the yttria content in the YSZ in the first electrolyte layer 21 is B mol%, $0.96 < A/B < 1.04$ is preferable, and $0.98 < A/B < 1.02$ is more desirable. $A/B = 1$ is particularly desirable. Herein, $9.00 < A \leq 11$ and $9.00 < B \leq 11$ hold.

The thickness of the first electrolyte layer 21 is not particularly limited, and it is 0.5 $\mu$m to 20 $\mu$m, for example.

The barrier layer 30 prevents the first electrolyte layer 21 and the cathode 40a from reacting with each other during firing of the cathode 40a in the process of producing the SOFC cell 2a or during the operation of the SOFC, thus forming a high resistance material layer and causing a decrease in the power generation performance. As the material for the barrier layer 30, a material containing ceria and a rare earth element as main components can be used. For example, gadolinia-doped ceria (GDC), samaria-doped ceria (SDC), or the like can be used. The thickness of the barrier layer 30 is not particularly limited, and it is 0.5 $\mu$m to 20 $\mu$m, for example. The barrier layer 30 is not an essential element, and may be omitted depending on the combination of the electrolyte in the first electrolyte layer 21 and the cathode 40.

As shown in FIG. 2, the cathode 40a is formed on the opposite side of the first electrolyte layer 21 from the anode functional layer 11. The cathode 40a is formed, for example, on a principal surface of the barrier layer 30 opposite to the principal surface thereof in contact with the first electrolyte layer 21. In the case where the barrier layer 30 is omitted, the cathode 40a may be formed on a principal surface of the first electrolyte layer 21 opposite to a principal surface thereof in contact with the anode functional layer 11.

As the material for the cathode 40a, for example, a metal, a metal oxide, a composite metal oxide, or the like can be used. Examples of the metal include metals such as Pt, Au, Ag, Pd, Ir, Ru, and Ru, and alloys containing two or more of these metals. Examples of the metal oxide include oxides of metals such as La, Sr, Ce, Co, Mn, and Fe (for example, $La_2O_3$, $SrO$, $Ce_2O_3$, $Co_2O_3$, $MnO_2$, $FeO$, etc.). Examples of the composite metal oxide include various composite oxides containing at least one of La, Pr, Sm Sr, Ba, Co, Fe, Mn, etc. (for example, $La_{1-x}Sr_xCoO_3$-based composite oxides, $La_{1-x}Sr_xFeO_3$-based composite oxides, $La_{1-x}Sr_xCo_{1-y}Fe_yO_3$-based composite oxides, $La_{1-x}Sr_xMnO_3$-based composite oxides, $Pr_{1-x}Ba_xCoO_3$-based composite oxides, and $Sm_{1-x}Sr_xCoO_3$-based composite oxides). Herein, $0 < x < 1$ and $0 < y < 1$ hold. Among these, a $La_{1-x}Sr_xCo_{1-y}Fe_yO_3$-based composite oxide (hereinafter also referred to as "LSCF") is preferably used as the material for the cathode 40a. In this case, in order to prevent delamination of the cathode 40a from the barrier layer 30 due to thermal expansion thereof and to improve oxygen ion conductivity, the cathode 40a may contain GDC or SDC.

Next, stabilizers in stabilized zirconia that can be used in the anode functional layer 11 and in the first electrolyte layer 21 are discussed. Furthermore, the relationship between the yttria content in the YSZ used for the anode functional layer 11 and the yttria content in the YSZ used for the first electrolyte layer 21 and the power generation performance is discussed.

Materials having high oxygen ion conductivity have been considered desirable as materials for SOFC electrolyte layers from the viewpoint of power generation performance. For example, since scandia-stabilized zirconia (ScSZ) has high oxygen ion conductivity, the use of ScSZ has been considered as the means for obtaining SOFCs exhibiting high power generation performance. However, the present inventors have found that in reality, the power generation performance of the SOFC cell 2a in which YSZ having a lower oxygen ion conductivity than that of ScSZ is used for the anode functional layer 11 and the first electrolyte layer 21 is higher than the power generation performance of the SOFC cell 2a in which ScSZ is used for the anode functional layer 11 and the first electrolyte layer 21.

The metal oxide as the conductive component of the anode functional layer 11 changes to an electrically conductive metal in a reducing atmosphere during the operation of the SOFC. For example, in the case where the conductive component is nickel oxide, this nickel oxide changes to metal nickel in a reducing atmosphere during the operation of the SOFC. Thereby, the conductive component contracts. Presumably, this contraction generates a force to separate the conductive component from the electrolyte component in the anode functional layer 11 or from the electrolyte component in the first electrolyte layer 21 at the interface with the anode functional layer 11. The present inventors believe that this separation of the conductive component from the electrolyte component causes a decrease in the power generation performance of the SOFC. When a SOFC cell in which ScSZ is used for the anode functional layer 11 and the first electrolyte layer 21 is compared with a SOFC cell in which YSZ is used for the anode functional layer 11 and the first electrolyte layer 21, the occurrence of the separation is presumably suppressed to a greater extent in the latter SOFC cell. Presumably, this is the reason why the power generation performance of the SOFC cell in which YSZ is used for the anode functional layer 11 and the first electrolyte layer 21 is higher than the power generation performance of the SOFC cell in which ScSZ is used for the anode functional layer 11 and the first electrolyte layer 21.

It is believed that the bonding strength of the grain boundaries in the anode functional layer 11 and in the first electrolyte layer 21 at the interface with the anode functional layer 11 increases as the difference between the ionic radius of zirconium ions $Zr^{4+}$ and the ionic radius of metal ions derived from a metal oxide added as a stabilizer to stabilized zirconia increases. The present inventors believe that the bonding strength of the grain boundaries has an effect on the suppression of the separation as described above. The difference between the ionic radius of $Y^{3+}$ and that of $Zr^{4+}$ is sufficiently larger than the difference between the ionic radius of $Sc^{3+}$ and that of $Zr^{4+}$. Therefore, when a SOFC cell in which ScSZ is used as the electrolyte component in the anode functional layer 11 and in the first electrolyte layer 21 is compared with a SOFC cell in which YSZ is used as the electrolyte component in the anode functional layer 11 and in the first electrolyte layer 21, the occurrence of the separation is presumably suppressed to a greater extent in the latter SOFC cell. Presumably, this is the reason why the SOFC cell in which YSZ is used as the electrolyte component in the anode functional layer 11 and in the first electrolyte layer 21 exhibits higher power generation performance than that of the SOFC cell in which ScSZ is used as the electrolyte component in the anode functional layer 11 and in the first electrolyte layer 21.

The above discussion suggests that if the ionic radius of metal ions derived from a metal oxide added as a stabilizer to stabilized zirconia contained in the anode functional layer 11 or the first electrolyte layer 21 is comparable to that of $Y^{3+}$, the resulting SOFC cell probably has the effect of suppressing the separation of the conductive component as in the case of the SOFC cell in which YSZ is used as the electrolyte component in the anode functional layer 11 and in the first electrolyte layer 21. The ionic radii of $Yb^{3+}$, $Er^{3+}$, $Eu^{3+}$, $Dy^{3+}$, $Ga^{3+}$, and the like are comparable to the ionic radius of $Y^{3+}$. Therefore, stabilized zirconia with praseodia, neodia, samaria, gadolinia, dysprosia, europia, erbia, ytterbia, or the like added may be used as stabilized zirconia contained in the anode functional layer 11 or the first electrolyte layer 21. Among these, stabilized zirconia with europia, erbia, or ytterbia added is preferably used.

It has been known that the oxygen ion conductivity of YSZ reaches a peak when the yttria content is about 8 mol% and decreases when the yttria content exceeds 8 mol%. Therefore, it has been considered desirable from the viewpoint of power generation performance to use stabilized zirconium with 8 mol% yttria (8YSZ) added for the anode functional layer 11 and the first electrolyte layer 21. On the other hand, the present inventors have focused attention on the possibility that the extent of the above-described suppression of the separation of the conductive component varies depending on the yttria content in YSZ. So the present inventors have conducted intensive studies. The results of the studies suggest that the effect of suppressing the separation of the conductive component in SOFC cells is the most pronounced when the yttria content in the YSZ in the anode functional layer 11 and the yttria content in the YSZ in the first electrolyte layer 21 are each more than 9.00 mol% and 11 mol% or less. In fact, the present inventors have found that the power generation performance of the SOFC cell in which the yttria content in the YSZ in the anode functional layer 11 and the yttria content in the YSZ in the first electrolyte layer 21 are in the above range is equal to or higher than the power generation performance of the SOFC in which 8YSZ is used in the anode functional layer 11 and 8YSZ is used in the first electrolyte layer 21.

When the half cell 1a is placed for 4 hours in an electric furnace with a mixed gas atmosphere containing $H_2$ and $N_2$ in a volume ratio of 1:9 at a pressure of 1 atm and a temperature of 750°C so as to reduce a metal oxide as the conductive component in the anode functional layer 11, the degree of separation of the conductive component from the YSZ as the electrolyte component in the anode functional layer 11 is 10% or less. The degree of separation is desirably 9% or less, and more desirably 8% or less. When the half cell 1a is placed for 4 hours in an electric furnace with a mixed gas atmosphere containing $H_2$ and $N_2$ in a volume ratio of 1:9 at a pressure of 1 atm and a temperature of 750°C so as to reduce a metal oxide as the conductive component in the anode functional layer 11, the degree of interfacial separation of the conductive component from the YSZ as the electrolyte component in the first electrolyte layer 21 is 10% or less. The degree of interfacial separation is desirably 8% or less, and more desirably 6% or less. As described above, in the half cell 1a, the separation of the conductive component from the electrolyte component in the anode functional layer 11 or the separation of the conductive component from the YSZ as the electrolyte component in the first electrolyte layer 21 at the interface with the anode functional layer 11 is suppressed. Thus, the SOFC cell 2a exhibits high power generation performance.

The degree of separation and the degree of interfacial separation can be obtained as follows. After being exposed to the above-mentioned atmosphere, the half cell 1a is cut with a glass cutter along the direction in which the anode support substrate 12, the anode functional layer 11, and the first electrolyte layer are stacked, and the cross section of the half cell 1a is photographed with a SEM (scanning electron microscope). Specifically, the cross section of the anode functional layer or the cross section near the interface between the anode functional layer 11 and the first electrolyte layer 21 is photographed with a SEM at a magnification of 20,000. This photographed image is analyzed with an image analyzing software (Image-Pro, manufactured by Media Cybernetics) so as to obtain the total length La of the perimeters of 6 or more arbitrarily selected particles of the conductive component in the anode functional layer 11 (except for the portions of the perimeters that are in contact with pores). Next, the total length Lb of the portions of the perimeters of the conductive component particles that are not in contact with the electrolyte component in the anode functional layer 11 is obtained. The degree of separation of the conductive component in the anode functional layer is defined by the following equation:

$$\text{Degree of separation of conductive component in anode functional layer [\%]} = (\text{Lb/La}) \times 100$$

The same applies to the interfacial separation. The cross section near the interface between the first electrolyte layer 21 and the anode functional layer 11 is photographed with a SEM and the photographed image is analyzed. Then, for 6 or more arbitrarily selected particles of the conductive component in the anode functional layer 11 that face the interface between the first electrolyte layer 21 and the anode functional layer 11, the total length Na of the portions of the perimeters of the particles that face the interface with the first electrolyte layer 21 is obtained. Next, for the portions of the perimeters of the conductive component particles that face the interface with the first electrolyte layer 21 (except for the portions that are in contact with pores), the total length Nb of the portions of the perimeters that are not in contact with the electrolyte component in the first electrolyte layer 21 is obtained. The degree of interfacial separation of the conductive component in the anode functional layer 11 from the first electrolyte layer 21 is defined by the following equation:

$$\text{Degree of interfacial separation of conductive component in anode functional layer from first electrolyte layer [\%]} = (\text{Nb/Na}) \times 100$$

Next, the method for producing the half cell 1a and the SOFC cell 2a of the present embodiment is described.

The anode support substrate 12, the anode functional layer 11, the first electrolyte layer 21, the barrier layer 30, and the cathode 40a can be obtained as follows. A binder and a solvent are added and optionally a dispersant, a plasticizer, a lubricant, a defoaming agent, etc. are further added to a powder material for each of these layers so as to prepare a slurry or a paste. This slurry or paste is dried to form a green sheet or a green layer, which is then fired. The binder and the solvent added to prepare the slurry or the paste used to produce the anode support substrate 12, the anode functional layer 11, the first electrolyte layer 21, the barrier layer 30, or the cathode 40a can be appropriately selected from known binders and solvents in conventional production methods.

In the ASC, the anode 10 is first prepared. A binder and a solvent are added and optionally a dispersant, a plasticizer, a lubricant, a defoaming agent, etc. are further added to a powder material for the conductive component of the anode support substrate 12, a powder material for the electrolyte component thereof, and a pore forming agent to prepare a slurry. This slurry is formed into a sheet shape and then dried so as to obtain a green sheet for the anode support substrate 12.

Subsequently, a binder, and a solvent are added, and optionally a dispersant, a plasticizer, a lubricant, a defoaming agent, etc. are further added to a conductive component and an electrolyte component for the anode functional layer 11 and a pore forming agent so as to prepare a paste for the anode functional layer, and then the paste is applied to one principal surface of the green sheet for the anode support substrate 12 to form a coating layer with a predetermined thickness. Then, the coating layer is dried to form a green layer for the anode functional layer 11.

The paste for the anode functional layer 11 is obtained by disintegrating, under predetermined conditions, a mixture containing the powder material of the conductive component and the powder material of the electrolyte component for the anode functional layer 11 and additives such as a binder and a solvent. It is presumed that the disintegrating conditions are associated with a low degree of separation in the anode functional layer 11 in the half cell 1a of the present embodiment. This disintegrating can be performed using a three-roll mill.

Subsequently, the paste for the first electrolyte layer 21 is applied to the green layer for the anode functional layer 11 to form a coating layer with a predetermined thickness, and the coating layer is dried to form a green layer for the first electrolyte layer 21. Then, a paste for the barrier layer 30 is applied to the green layer for the first electrolyte layer 21 to form a coating layer with a predetermined thickness, and the coating layer is dried to form a green layer for the barrier layer 30.

Subsequently, the stack of the green sheet for the anode support substrate 12, the green layer for the anode functional layer 11, the green layer for the first electrolyte layer 21, and the green layer for the barrier layer 30 thus formed is fired. Thus, the half cell 1a of the present embodiment is obtained.

A paste for the cathode 40a is applied to the barrier layer 30 of the half cell 1a obtained as described above to form a coating layer, and the coating layer is dried to form a green layer for the cathode 40a. Then, a half cell including the green layer for the cathode 40a thus formed is fired. Thus, the SOFC cell 2a of the present embodiment is obtained.

The ASC is described above in the present embodiment, but the present invention can also be implemented as an ESC. In this case, it is recommended to produce an ESC-type half cell and a SOFC cell as an ESC, for example, in the following manner. First, a slurry for the electrolyte layer is prepared. The slurry is formed into a sheet shape and dried to obtain a green sheet for the electrolyte layer. A paste for the anode is applied to one principal surface of this green sheet for the electrolyte layer to form a coating layer, and the coating layer is dried to form a green layer for the anode. A paste for the barrier layer is applied to the other principal surface of the green sheet for the electrolyte layer, as needed, to form a coating layer, and the coating layer is dried to form a green layer for the barrier layer. The green sheet for the electrolyte layer on which the green layer for the anode and the green layer for the barrier layer are formed is fired. Thus, an ECS-type half cell can be obtained. A paste for the cathode is applied to the barrier layer in this ESC-type half cell to form a coating layer, and the coating layer is dried to form a green layer for the cathode, which is then fired. Thus, a SOFC cell as an ESC can be obtained.

(modification)

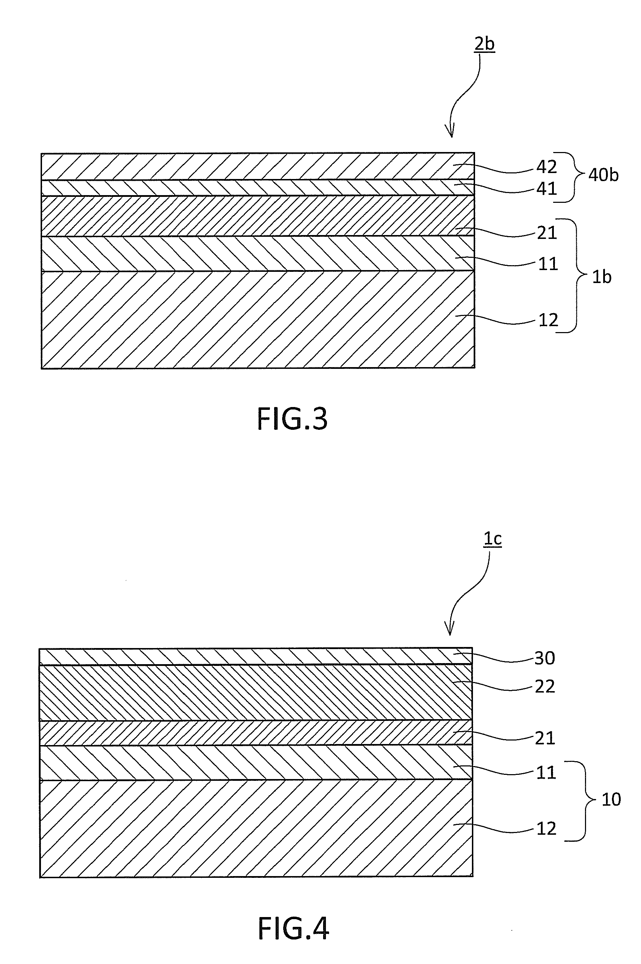

As shown in FIG. 3, in the present embodiment, the cathode 40a may be replaced by a cathode 40b having a two-layer structure (41 and 42). A SOFC cell 2b according to a modification is configured in the same manner as in the embodiment as described above, except that the SOFC cell 2b includes a half cell 1b without the barrier layer instead of the half cell 1a and the cathode 40b having a two-layer structure.

The cathode 40b includes a first cathode layer 41 disposed on or above the first electrolyte layer 21 and a second cathode layer 42 disposed on the first cathode layer 41 on the opposite side of the first cathode layer 41 from the first electrolyte layer 21. The material constituting the first cathode layer 41 or the second cathode layer 42 may be selected from the materials given as examples of the material of the cathode 40a. It is desirable that the first cathode layer 41, in particular, contain lanthanum strontium manganite (hereinafter also referred to as "LSM") that is an oxide with an elemental composition of $(La_xSr_{1-x})_{1-a}Mn$, (x is in a range of 0.5 to 0.9 and a is in a range of 0.0 to 0.2) and an oxygen ion conducting material. It is desirable that the second cathode layer 42 contain LSM as a main component.

The first cathode layer 41 is a layer in which an electrochemical reaction actually takes place, and thus it is a cathode active layer, in other words. The first cathode layer 41 may contain other components, such as platinum and silver, than the LSM and the oxygen ion conducting material. The content of the components other than the LSM and the oxygen ion conducting material that may be contained in the first cathode layer 41 is, for example, 5 mass% or less, more desirably 4 mass% or less, and even more desirably 3 mass% or less. It is particularly desirable that the first cathode layer 41 be substantially free of the components other than the LSM and the oxygen ion conducting material. Herein, the phrase "being substantially free of a component" means that the content of the component is 1 mass% or less. In particular, it is desirable that the first cathode layer 41 consist of the LSM and the oxygen ion conducting material without containing any component other than the LSM and the oxygen ion conducting material.

The oxygen ion conducting material contained in the first cathode layer 41 is desirably scandia-stabilized zirconia or scandia-stabilized zirconia doped with a metal oxide. The scandia-stabilized zirconia is, for example, zirconia stabilized with 4 to 11 mol% scandia. The metal oxide doped into scandia-stabilized zirconia is, for example, $CeO_2$, $Al_2O_3$, or $Bi_2O_3$. Examples of the desirable oxygen ion conducting material include $(Sc_2O_3)_{0.10}(CeO_2)_{0.01}(ZrO_2)_{0.89}$. These materials may be used alone or in a combination of two or more thereof. When the oxygen ion conducting material contained in the first cathode layer 41 is scandia-stabilized zirconia or scandia-stabilized zirconia doped with a metal oxide, as in the case of the present embodiment, the power of the entire SOFC cell is higher than that obtained when another oxygen ion conducting material (for example, yttria-stabilized zirconia) is contained in the first cathode layer 41.

With the objective of obtaining a SOFC exhibiting high power output, it is desirable that the thickness of the first cathode layer 41 be, for example, in a range of 2.5 to 40 $\mu$m, in view of the fact that an electrochemical reaction actually takes place in the first cathode layer 41. When the thickness of the first cathode layer 41 is 2.5 $\mu$m or more, the amount of three-phase interfaces serving as reaction fields of a vapor phase, LSM, and an oxygen ion conducting material increases, and therefore the power output from the SOFC cell can be increased. In addition, when the thickness of the first cathode layer 41 is 40 $\mu$m or less, a gas (air) can be efficiently supplied to the electrochemical reaction field, and therefore the power output from the SOFC cell can be increased. With the objective of further increasing the power output from the SOFC cell, the thickness of the first cathode layer 41 is more desirably in a range of 2.5 to 35 $\mu$m, even more desirably in a range of 3 to 27 $\mu$m, and particularly desirably in a range of 4 to 18 $\mu$m.

The content of the oxygen ion conducting material contained in the first cathode layer 41 is desirably 51 mass% or more and 80 mass% or less, more desirably 52 mass% or more and 75 mass% or less, and even more desirably 55 mass% or more and 70 mass% or less. When the content of the oxygen ion conducting material contained in the first cathode layer 41 is 51 mass% or more, the SOFC cell outputs high power, and when the content is 55 mass% or more and 70 mass% or less, the SOFC cell outputs higher power.

With the objective of achieving a balance between the suppression of the resistivity of the material of the first cathode layer 41 and the suppression of the electrode delamination due to the difference in the thermal expansion coefficient between the LSM and the electrolyte during the fabrication or operation of the SOFC cell, the content of the oxygen ion conducting material contained in the first cathode layer 41 may be in the following ranges. That is, the content of the oxygen ion conducting material in the first cathode layer 41 is desirably 10 mass% or more and 49 mass% or less, more desirably 15 mass% or more and 47 mass% or less, and even more desirably 20 mass% or more and 45 mass% or less.

The concentration of the oxygen ion conducting material in first cathode layer 41 may be uniform or may vary in the thickness direction. In the case where the concentration of the oxygen ion conducting material in the thickness direction of the first cathode layer 41 varies, the concentration of the oxygen ion conducting material may decrease as the distance from the first electrolyte layer 21 increases.

The second cathode layer 42 is a layer for introducing electrons and air into the first cathode layer 41, and thus it is a cathode current collecting layer in other words. The second cathode layer 42 is a layer containing LSM as a main component. Herein, the "main component" refers to a component that accounts for at least 60 mass% in the second cathode layer 42. The content of the oxygen ion conducting material in the second cathode layer 42 is lower than that of the oxygen ion conducting material in the first cathode layer 41. The content of the oxygen ion conducting material contained in the second cathode layer 42 is, for example, 40 mass% or less, desirably 35 mass% or less, and more desirably 30 mass% or less. It is even more desirable that the second cathode layer 42 be substantially free of the oxygen ion conducting material. Herein, the phrase "being substantially free of the oxygen ion conducting material" means that the content thereof is 1 mass% or less. It is particularly desirable that the second cathode layer 42 contain no oxygen ion conducting material. Herein, it is desirable that the oxygen ion conducting material in the second cathode layer 42 be the same material as the oxygen ion conducting material contained in the first cathode layer 41 or be a material similar thereto.

Since the content of the oxygen ion conducting material in the second cathode layer 42 is lower than the content of the oxygen ion conducting material in the first cathode layer 41, the second cathode layer 42 exhibits good electron conductivity. Therefore, electrons are introduced efficiently into the first cathode layer 41, in which an electrochemical reaction with high reactivity takes place. This allows the SOFC cell to output high power as a whole. In particular, when the second cathode layer 42 is substantially free of the oxygen ion conducting material, the second cathode layer 42 exhibits particularly good electron conductivity, resulting in higher power output from the SOFC cell.

The thickness of the second cathode layer 42 is, for example, 2.5 $\mu$m or more, with the objective of achieving good electron conductivity. When the thickness of the second cathode layer 42 is 2.5 $\mu$m or more, the second cathode layer 42 can be formed uniformly on the entire surface of the first cathode layer 41. Therefore, good electron conductivity is achieved. The thickness of the second cathode layer 42 is, for example, 100 $\mu$m or less, to supply a gas (air) efficiently to the electrochemical reaction field. When the thickness of the second cathode layer 42 is 100 $\mu$m or less, the electrical loss of the second cathode layer 42 itself can be reduced while its porous structure is maintained. Therefore, the electrical loss of the cathode can be reduced while a gas (air) is supplied efficiently to the electrochemical reaction field. With the objective of improving these properties, the thickness of the second cathode layer 42 is desirably 4 to 50 $\mu$m, and more desirably 5 to 40 $\mu$m.

The ratio (T1/T2) of the thickness of the first cathode layer 41 (T1) to the thickness of the second cathode layer 42 (T2) is in a predetermined range, it is easy to achieve all of the good progress of the electrochemical reaction, good electron conductivity, and efficient supply of a gas (air) to the electrochemical reaction field. Furthermore, when the ratio T1/T2 is a predetermined value or more (for example, 0.0250), the distance from the surface of the second cathode layer 42 to the three-phase interface serving as the substantial reaction field is shorter, and thus a gas (oxygen) can be supplied efficiently to the reaction field. In addition, since the first cathode layer 41 can be formed uniformly, uneven distribution of the three-phase interfaces serving as the reaction fields can be reduced. Therefore, a high performance SOFC cell can be provided. Furthermore, when the ratio T1/T2 is a predetermined value or less (for example, 15.5), the distance from the surface of the cathode 40b to the three-phase interface serving as the substantial reaction field is shorter, and thus a gas (oxygen) can be supplied efficiently to the reaction field. In addition, the second cathode layer 42 can be formed uniformly on the entire surface of the first cathode layer 41. Therefore, good electron conductivity is achieved and thus a high performance SOFC cell can be provided. In view of the above, the ratio T1/T2 is, for example, 0.0250 to 15.5, desirably 0.0500 to 10, and more desirably 0.0625 to 8.

The SOFC cell 2b of this modification has a relatively low operating temperature although a mixture of LSM and an oxygen ion conducting material is used as the cathode 40b. Therefore, peripheral components such as interconnectors placed between unit cells can be made of metallic materials. Since metallic materials are inexpensive and easy to process, a power generation device using a SOFC can be obtained at low cost.

It is conventionally known to use lanthanum strontium cobalt ferrite (hereinafter also referred to as "LSCF") represented by $La_{1-y}Sr_yCo_{1-z}Fe_zO_3$ (y is in a range of 0.1 to 0.5 and z is in a range of 0.2 to 0.8) as a cathode to achieve a relatively low operating temperature. However, a cathode using this LSCF is less durable. The SOFC cell 2b of the present embodiment using a mixture of LSM and an oxygen ion conducting material as a cathode has higher durability than a SOFC cell using LSCF as a cathode.

The first cathode layer 41 is a layer in which an electrochemical reaction actually takes place. The greater the amount of three-phase interfaces of LSM as an electrode material, oxygen ion conducting material, and a vapor phase becomes, the more actively the electrochemical reaction proceeds, resulting in higher power output from a SOFC. A LSM powder material is used to form the first cathode layer 41. When the average particle diameter of this LSM powder material is small, the amount of the above-mentioned three-phase interfaces increases, which is advantageous in obtaining a higher power SOFC. In view of this, the desirable average particle diameter of the LSM powder material used to form the first cathode layer 41 is, for example, 2.0 $\mu$m or less.

The second cathode layer 42 is a layer for introducing not only electrons but also air into the first cathode layer 41. Therefore, it is advantageous in achieving a higher power SOFC to ensure air diffusibility in the second cathode layer 42. The LSM powder material is used to form the second cathode layer 42. In view of the air diffusibility in the second cathode layer 42, it is desirable that the LSM powder material have a predetermined average particle diameter. In view of this, the desirable average particle diameter of the LSM powder material used to form the second cathode layer 42 is, for example, 0.5 $\mu$m or more and 20 $\mu$m or less.

The average particle diameter refers to the particle diameter corresponding to the cumulative volume percentage of 50% (D50) in the particle size distribution measured by laser diffraction particle size distribution measurement.

The SOFC cell 2b according to the modification is produced by forming the first cathode layer 41 and the second cathode layer 42 on the first electrolyte layer 21 of the half cell 1b consisting of the anode support substrate 12, the anode functional layer 11, and the first electrolyte layer 21.

A binder and a solvent are added, and optionally a dispersant, a plasticizer, a lubricant, a defoaming agent, etc. are further added to the material for the first cathode layer 41, that is, the powder of LSM and the powder of an oxygen ion conducting material in this case, to prepare a paste. This paste is applied onto the first electrolyte layer 21 of the half cell 1b, and dried to form a green layer for the first cathode layer 41.

A binder and a solvent are added and optionally a dispersant, a plasticizer, a lubricant, a defoaming agent, etc. are further added to the material for the second cathode layer 42, that is, the powder of LSM in this case, to prepare a paste. This paste is applied onto the green layer for the first cathode layer 41, and dried to form a green layer of the second cathode layer 42. A half cell including a stack of the green layer of the first cathode layer 41 and the green layer of the second cathode layer 42 is fired. Thus, the SOFC cell 2b can be obtained. The conditions of the firing temperature can be determined as appropriate depending on the types of the materials used for the first cathode layer 41 and the second cathode layer 42. The types of the binders, solvents, etc. used to prepare the paste for the first cathode layer 41 and the paste for the second cathode layer 42 are not limited, and any binder, solvent, etc. can be appropriately selected from known ones in conventional production methods for SOFC cathodes.

The green layer for the first cathode layer 41 may have a multilayer structure formed by preparing a plurality of pastes with different mixing ratios of the LSM and the oxygen ion conducting material and repeating application and drying of the pastes. In this case, the green layer for the first cathode layer 41 can be formed in such a manner that the content of the oxygen ion conducting material powder decreases as the distance from the first electrolyte layer 21 increases. Thereby, a SOFC cell having the first cathode layer 41 with a decreasing concentration of the oxygen ion conducting material in the thickness direction can be produced.

<Second Embodiment>

Next, a half cell 1c and a SOFC cell 2c according to the second embodiment are described. The second embodiment is configured in the same manner as the first embodiment, unless otherwise specified. The description of the first embodiment and the modification thereof also applies to the second embodiment unless a technical contradiction arises.

As shown in FIG. 4, the half cell 1c includes a second electrolyte layer 22. The second electrolyte layer 22 is formed on the principal surface of the first electrolyte layer 21 opposite to the principal surface thereof on which the anode functional layer 11 is formed. It is desirable that the second electrolyte layer 22 contain scandia-stabilized zirconium as a main component. Herein, the "main component" refers to a component having the highest content by mass.

The scandia-stabilized zirconia contained as a main component in the second electrolyte layer 22 is, for example, zirconia stabilized with 4 to 11 mol% scandia. The scandia-stabilized zirconia contained as a main component in the second electrolyte layer 22 may be doped with a given metal oxide. This doping metal oxide is, for example, $CeO_2$, $Al_2O_3$, or $Bi_2O_3$. The scandia-stabilized zirconia contained as a main component in the second electrolyte layer 22 is desirably 10 mol% scandia 1 mol% ceria-stabilized zirconia, for example. The second electrolyte layer 22 may contain a component other than the above-mentioned scandia-stabilized zirconia. It is desirable that the second electrolyte layer 22 consist of the above-mentioned scandia-stabilized zirconia.

The total thickness of the first electrolyte layer 21 and the second electrolyte 22 is not particularly limited, and it is 1 $\mu$m to 30 $\mu$m, for example. The oxygen ion conductivity of scandia-stabilized zirconia is higher than the oxygen ion conductivity of yttira-stabilized zirconia. Therefore, it is better that the thickness of the second electrolyte layer 22 be relatively large in order to provide a SOFC half cell, a SOFC cell, or a SOFC having high power generation performance. Therefore, the thickness of the second electrolyte layer 22 is, for example, 30% or more of the total thickness of the second electrolyte layer 22 and the first electrolyte layer 21. The thickness of the second electrolyte layer 22 is desirably 35% or more, more desirably 40% or more, and even more desirably 45% or more, of the total thickness of the first electrolyte layer 21 and the second electrolyte layer 22. The thickness of the second electrolyte layer 22 is, for example, 95% or less of the total thickness of the second electrolyte layer 22 and the first electrolyte layer 21. Accordingly, the first electrolyte layer 21 has a predetermined thickness. Therefore, the first electrolyte layer 21 can be formed uniformly on the entire surface of the second electrolyte layer 22 without any defects such as through holes. As a result, the production yield of the SOFC half cell or the SOFC cell can be increased, and variations in the power output from the SOFC cell can be suppressed.

As shown in FIG. 4, the half cell 1c includes the barrier layer 30. This barrier layer 30 is configured in the same manner as in the first embodiment.

The SOFC cell 2c includes the half cell 1c and the cathode 40a formed on the opposite side of the first electrolyte layer 21 from the anode functional layer 11. The cathode 40a is configured in the same manner as in the first embodiment.

The half cell 1c and the SOFC cell 2c can be produced by adding the steps of preparing a paste for the second electrolyte layer 22 and then applying this paste to the green layer for the first electrolyte layer 21 to form a green layer for the second electrolyte layer 22 to the production process of the half cell 1a and the SOFC cell 2a. The paste for the second electrolyte layer 22 is prepared by adding a binder and a solvent and optionally adding a dispersant, a plasticizer, a lubricant, a defoaming agent, etc. to the powder material for the second electrolyte layer 22.

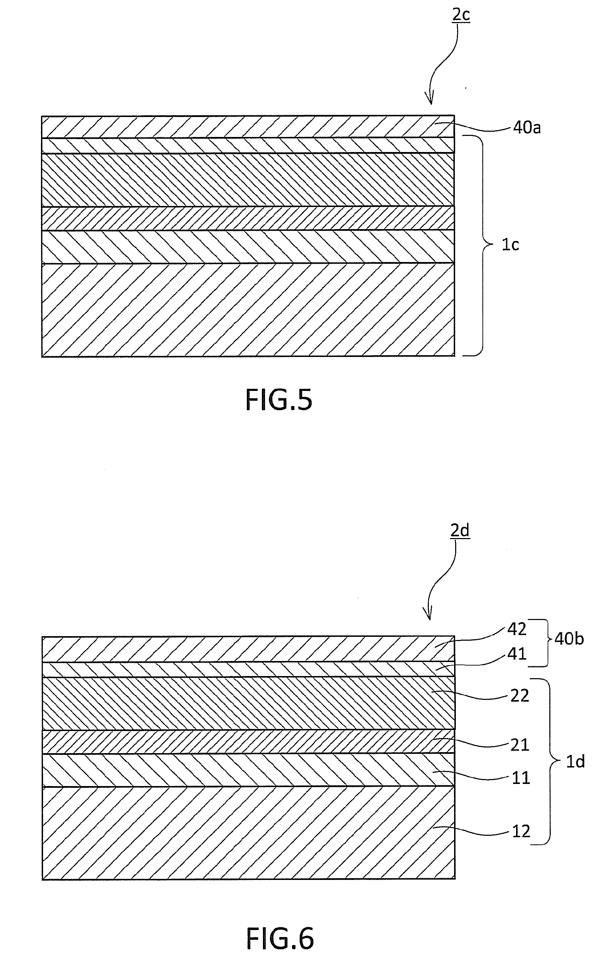

As shown in FIG. 6, a SOFC cell 2d according to a modification may be configured by using a half cell 1d corresponding to the half cell 1c without the barrier layer 30 and the cathode 40b having a two-layer structure instead of the cathode 40a. The cathode 40b of the SOFC cell 2d is configured in the same manner as the cathode 40b according to the modification of the first embodiment.

EXAMPLES

Next, the present invention will be described in detail with reference to Examples. The following Examples relate to exemplary examples of the present invention, and the present invention is not limited to the following Examples.

The evaluation methods used in Examples and Comparative Examples are described.

<Method for analyzing and calculating yttria-stabilized zirconia powder composition>

Assuming that the ytrria-stabilized zirconia powder consists of zirconia ($ZrO_2$) and yttria ($Y_2O_3$), the content (mass%) of yttria ($Y_2O_3$) was analyzed by ICP (Model: iCAP 6500 Duo, manufactured by Thermo Fisher Scientific). Assuming that the component other than yttria is zirconia, the content (mass%) of zirconia ($ZrO_2$) was calculated. Based on the contents (mass%) of these oxides thus obtained, the content (mol%) of yttria ($Y_2O_3$) and the content (mol%) of zirconia ($ZrO_2$) were calculated.

<Test for evaluating cell performance>

The test for evaluating the cell performance is described. The temperature of a SOFC cell was raised to a measurement temperature (750°C) at a rate of 100°C/hr while nitrogen was supplied to the anode at 100 mL/min and air was supplied to the cathode at 100 mL/min. After the temperature was raised, the flow rates of the gases on the outlet side of the anode and the outlet side of the cathode were measured with a flowmeter to confirm that there was no leakage of the gases. Next, a humidified gas mixture of hydrogen at 6 mL/min and nitrogen at 194 mL/min was supplied to the anode and air at 400 mL/min was supplied to the cathode. After a lapse at least 10 minutes, it was confirmed again that an electromotive force was generated and there was no leakage of the gases, and then humidified hydrogen (water vapor: 18 vol.%) was supplied to the anode at a flow rate of 200 mL/min. After the electromotive force was stabilized, the current density was increased monotonously from 0 to 0.4 A/cm$^2$ so as to measure the performance of the cell. The current density at a current density of 0.36 A/cm$^2$ was calculated.

<Degree of separation>

For the half cell of each of Examples and Comparative Examples, which had been subjected to later-described hydrogen reduction treatment, the degree of separation was measured by observing by SEM the cross section of the half cell taken in the direction in which the anode support substrate, the anode functional layer, and the first electrolyte layer were stacked. The hydrogen reduction treatment was performed by placing the half cell of each of Examples and Comparative Examples for 4 hours in an electric furnace (KTF-045N, manufactured by Koyo Thermo System Co., Ltd.) with a mixed gas atmosphere containing $H_2$ and $N_2$ in a volume ratio of 1:9 at a pressure of 1 atm and a temperature of 750°C. Thereby, the metal oxide as a conductive component of the anode functional layer was reduced.

The cross section of the hydrogen reduction-treated half cell was photographed with a SEM at a magnification of 20,000. Focusing on the particles of the conductive component observed in the anode functional layer in the photographed image, the image was analyzed with an image analyzing software (Image-Pro, manufactured by Media Cybernetics). First, the total length La of the perimeters of arbitrarily selected 7 particles of the conductive component in the anode functional layer in the photographed image was obtained. Here, the lengths of the portions of the perimeters of the conductive component particles that were in contact with pores were subtracted from the perimeters of the particles. Next, the total length Lb of the portions of the perimeters of these 7 conductive component particles that were not in contact with the electrolyte component of the anode functional layer was obtained. Then, the degree of separation of the conductive component from the electrolyte component in the anode functional layer was calculated by the following equation:

$$\text{Degree of separation of conductive component in anode functional layer}$$
$$= (\text{Lb}/\text{La}) \times 100$$

<Degree of interfacial separation>

The above-described hydrogen-reduced half cell was cut with a glass cutter, and the cross section thereof was photographed with a SEM at a magnification of 20,000. Focusing on the particles of the conductive component in the anode functional layer observed at the interface with the first electrolyte layer in the photographed image, the image was analyzed with an image analyzing software (Image-Pro, manufactured by Media Cybernetics). Then, for arbitrarily selected 7 particles of the conductive component in the anode functional layer that faced the interface with the first electrolyte layer, the total length Na of the portions of the perimeters of the particles facing the interface with the first electrolyte layer was obtained. Next, for the portions of the perimeters of the conductive component particles in the anode functional layer that faced the interface with the first electrolyte layer, the total length Nb of the portions of the perimeters of the conductive component particles that were not in contact with the electrolyte component in the first electrolyte layer was obtained. Then, the degree of interfacial separation of the conductive component in the anode functional layer from the electrolyte component in the first electrolyte layer at the interface between the first electrolyte layer and the anode functional layer was calculated by the following equation:

$$\text{Degree of interfacial separation of conductive component in anode functional}$$
$$\text{layer from first electrolyte layer } [\%] = (\text{Nb}/\text{Na}) \times 100$$

<Durability test>

The temperature of a SOFC cell was raised to a measurement temperature (750°C) at 100°C/hr while nitrogen was supplied to the anode at 100 mL/min and air was supplied to the cathode at 100 mL/min. After the temperature was raised, the flow rates of the gases on the outlet side of the anode and the outlet side of the cathode were measured with a flowmeter to confirm that there was no leakage of the gases.

Next, a humidified gas mixture of hydrogen at 6 mL/min and nitrogen at 194 mL/min was supplied to the anode and air at 400 mL/min was supplied to the cathode. After a lapse of at least 10 minutes, it was confirmed again that an electromotive force was generated and there was no leakage of the gases, and then humidified hydrogen was supplied to the anode at a flow rate of 200 mL/min. After at least 10 minutes from the stabilization of the electromotive force, the current flow through the circuit was regulated at a constant level of 0.4 A/cm$^2$.

The voltage after 50 hours from the switching of the current to 0.4 A/cm$^2$ was used as an initial voltage ($V_{50h}$), and the voltage after 2000 hours ($V_{2000h}$) was measured to obtain the voltage decay rate D per 1000 hours by the following equation:

$$\text{Voltage decay rate D} = (V_{50h} - V_{2000h}) / \{(V_{50h}) \times (2000 - 50)\} \times 100 \times 1000$$

<Measurement of thickness of electrolyte layers>

After the above-described cell performance evaluation test, the temperature of the SOFC was lowered by supplying a gas mixture of hydrogen at 6 mL/min and nitrogen at 194 mL/min to the anode so as to obtain a sample in which nickel oxide as the conductive component of the anode functional layer had changed to metal nickel and the metal nickel remained unchanged even at ordinary temperatures. This sample was cut with a glass cutter to obtain a sample for cross-sectional observation. The cross section of this sample for cross-sectional observation was photographed using a field emission scanning electron microscope (JSM-7600F, manufactured by JEOL Ltd.).

The cross section of the sample for cross-sectional observation was photographed at the central location corresponding to the central portion of the cathode formed and at locations about 2 mm away from the end portions of the cathode so as to obtain three photographs of different fields of view. The arithmetic average value of the thicknesses of the electrolyte layer measured at arbitrary 5 points in each field of view (15 points in total) was obtained and used as the thickness of the electrolyte layer. The boundary between the anode-side electrolyte layer and the cathode-side electrolyte layer was determined by examining the distribution of each metal oxide using an energy-dispersive X-ray spectrometer.

The thicknesses of the first cathode layer and the second cathode layer were measured using a sample for cross-sectional observation obtained by cutting with a glass cutter. The cross section of the sample for cross-sectional observation was observed using a field emission scanning electron microscope (JSM-7600F, manufactured by JEOL Ltd.) so as to measure the thickness of the first cathode layer. The thickness of the first cathode layer was measured in three different fields of view, that is, at the central portion of the electrode and two locations about 2 mm away from the end portions of the electrode. The average value of the thicknesses of the first cathode layer measured at arbitrary 5 points in each field of view (15 points in total) was obtained and used as the thickness of the first cathode layer. The thickness of the second cathode layer was also measured in the same manner.

<Example 1>

(Preparation of green sheet for anode support substrate)

60 parts by mass of nickel oxide (manufactured by Seido Chemical Industry Co., Ltd.) as a conductive component, 40 parts by mass of 3 mol% yttria-stabilized zirconia powder (3YSZ) (Product name: "TZ3Y", manufactured by Tosoh Corporation) as an electrolyte component, 10 parts by mass of commercially available carbon black (SGP-3, manufactured by SEC Carbon, Ltd.) as a pore forming agent, 30 parts by mass of a binder made of a methacrylate copolymer (molecular weight: 30,000, glass transition temperature: -8°C, solid content: 50 parts by mass), 2 parts by mass of dibutyl phthalate as a plasticizer, and 80 parts by mass of a mixed solvent of toluene and isopropyl alcohol (mass ratio = 3/2) as a dispersion medium were mixed in a ball mill to prepare a slurry. The slurry thus obtained was formed into a sheet by the doctor blade method and dried at 70°C for 5 hours. After the drying, a green sheet for the anode support substrate with a thickness of 300 $\mu$m was obtained.

(Preparation of paste for anode functional layer)

55 parts by mass of nickel oxide (manufactured by Kishida Chemical Co., Ltd.) as a conductive component, 45 parts by mass of 10 mol% yttria-stabilized zirconia powder (10YSZ) (Product name: "HSY-10", manufactured by Daiichi Kigenso Kagaku Kogyo Co., Ltd.) as an electrolyte component, 3 parts by mass of commercially available carbon black (SGP-3, manufactured by SEC Carbon, Ltd.) as a pore forming agent, 56 parts by mass of $\alpha$-terpineol (manufactured by Wako Pure Chemical Industries, Ltd.) as a solvent, 14 parts by mass of ethyl cellulose (manufactured by Wako Pure Chemical Industries, Ltd.) as a binder, 5 parts by mass of dibutyl phthalate (manufactured by Wako Pure Chemical Industries, Ltd.) as a plasticizer, and 8 parts by mass of a commercially available sorbitan fatty acid ester surfactant as a dispersant were mixed in a mortar, and then the mixture was disintegrated on a three-roll mill (Model "M-80S", manufactured by EXAKT Technologies, Inc.) to obtain a paste for the anode functional layer. As a result of composition analysis by ICP (inductively coupled plasma), the yttria content in the 10YSZ was 10.04 mol%.

(Preparation of paste for first electrolyte layer)

100 parts by mass of 10 mol% yttria-stabilized zirconia powder (10YSZ) (Product name: "HSY-10", manufactured by Daiichi Kigenso Kagaku Kogyo Co., Ltd.), 10 parts by mass of ethyl cellulose (manufactured by Wako Pure Chemical Industries, Ltd.) as a binder, 70 parts by mass of $\alpha$-terpineol (manufactured by Wako Pure Chemical Industries, Ltd.) as a solvent, 6 parts by mass of dibutyl phthalate (manufactured by Wako Pure Chemical Industries, Ltd.) as a plasticizer, and 10 parts by mass of a commercially available sorbitan acid ester surfactant as a dispersant were mixed in a mortar, and then the mixture was disintegrated on a three-roll mill (Model "M-80S", manufactured by EXAKT Technologies, Inc.). Thus, a paste for the first electrolyte layer was obtained. As a result of composition analysis by ICP (inductively coupled plasma), the yttria content in the 10YSZ was 10.04 mol%.

(Preparation of paste for barrier layer)

With respect to 100 parts by mass of 20 mol% gadolinia-doped ceria (GDC) (manufactured by Seimi Chemical Co., Ltd.), 10 parts by mass of ethyl cellulose (manufactured by Wako Pure Chemical Industries, Ltd.) as a binder, 70 parts by mass of $\alpha$-terpineol (manufactured by Wako Pure Chemical Industries, Ltd.) as a solvent, 10 parts by mass of dibutyl phthalate (manufactured by Wako Pure Chemical Industries, Ltd.) as a plasticizer, and 20 parts by mass of a commercially available sorbitan acid ester surfactant as a dispersant were mixed in a mortar, and then the mixture was disintegrated in a three-roll mill (Model "M-80S", manufactured by EXAKT Technologies, Inc.). Thus, a paste for the barrier layer was obtained.

(Formation of green layer for anode functional layer)

The paste for the anode functional layer was applied onto the above-described green sheet for the anode support substrate by screen printing so as to form a layer with a thickness of 20 $\mu$m after firing. The paste was dried at 100°C for 30 minutes to form a green layer for the anode functional layer.

(Formation of green layer for first electrolyte layer)

The paste for the first electrolyte layer was applied onto the green layer for the thus obtained anode functional layer by screen printing so as to form a layer with a thickness of 15 $\mu$m after firing. The paste was dried at 100°C for 30 minutes to form a green layer for the electrolyte layer.

(Formation of green layer for barrier layer)

The paste for the barrier layer was applied onto the green layer for the thus obtained electrolyte layer by screen printing so as to form a layer with a thickness of 8 $\mu$m after firing. The paste was dried at 100°C for 30 minutes to form a green layer for the barrier layer.

(Firing of half cell)

After the green layer for the barrier layer was dried, a square piece was punched from the stack of the green sheet for the anode support substrate, the green layer for the anode functional layer, the green layer for the electrolyte layer, and the green layer for the barrier layer thus formed. Then, the square piece was fired at 1300°C for 2 hours. Thus, a half cell according to Example 1 was obtained. The fired half cell was a square piece of 6 cm × 6 cm.

(Preparation of paste for cathode)

80 parts by mass of $La_{0.6}Sr_{0.4}CO_{0.2}Fe_{0.8}O_3$ powder (manufactured by Seimi Chemical Co., Ltd), 20 parts by mass of 20 mol% gadolinia-doped ceria (manufactured by Seimi Chemical Co., Ltd.), 3 parts by mass of ethyl cellulose as a binder, and 30 parts by mass of $\alpha$-terpineol as a solvent were mixed in a mortar. Then, the mixture was kneaded in a three-roll mill (Model "M-80S", manufactured by EXAKT Technologies, Inc.) to obtain a paste for the cathode.

(Formation of cathode)

The paste for the cathode was applied to a square area of 1 cm × 1 cm on the surface of the electrolyte layer of the above-described half cell by screen printing. The paste was dried at 90C° for 1 hour to form a green layer for the cathode. Then, the green layer was fired at 1100°C for 2 hours. Thus, a SOFC cell according to Example 1 was obtained. The thickness of the fired cathode was 20 $\mu$m.

<Example 2>

A half cell according to Example 2 and a SOFC cell according to Example 2 were fabricated in the same manner as in Example 1, except that 9.10 mol% yttria-stabilized zirconia powder (9.1YSZ) was used instead of 10YSZ for the anode functional layer and 9.10 mol% yttria-stabilized zirconia powder (9.1YSZ) was used instead of 10YSZ for the first electrolyte layer.

<Example 3>

A half cell according to Example 3 and a SOFC cell according to Example 3 were fabricated in the same manner as in Example 1, except that 10.98 mol% yttria-stabilized zirconia powder (11YSZ) was used instead of 10YSZ for the anode functional layer and 10.98 mol% yttria-stabilized zirconia powder (11YSZ) was used instead of 10YSZ for the first electrolyte layer.

<Example 4>

Example 4 having a two-layer cathode structure (a first cathode layer and a second cathode layer) as shown in FIG. 3 is described.

(Preparation of LSM powder)

A LSM powder used for the first cathode layer and the second cathode layer was prepared as follows. Commercially available powders of $La_2O_3$, $SrCO_3$, and $Mn_2O_3$ with a purity of 99.9% were mixed to obtain a mixture with an elemental composition of $La_{0.8}Sr_{0.2}Mn$. Ethanol was added to the resulting mixture, followed by grinding and mixing in a bead mill for 1 hour. Next, the resulting mixture was dried and then calcined at 800°C for 1 hour. Ethanol was further added to the calcined mixture, followed by grinding and mixing in a bead mill for 1 hour and then drying. Then, the mixture was subjected to a solid-phase reaction at 1200°C for 5 hours to obtain a powder.
Ethanol was added to the resulting powder, followed by grinding and mixing in a ball mill for 10 hours and then drying. Thus, a LSM powder was obtained. It was confirmed by X-ray diffraction that the obtained powder is a single perovskite phase. Then, the powder was ground in a planetary ball mill at a controlled rotation speed and a controlled rotation time. Thus, a powder material (first powder material) with an average particle diameter (D50) of 0.49 $\mu$m for the first cathode layer and a powder material (second powder material) with an average particle diameter (D50) of 1.90 $\mu$m for the second cathode layer were obtained.

(Preparation of paste for first cathode layer)

50 parts by mass of the above-mentioned first powder material, 50 parts by mass of $(Sc_2O_3)_{0.10}(CeO_2)_{0.01}(ZrO_2)_{0.89}$ (hereinafter referred to as "ScSZ"), manufactured by Daiichi Kigenso Kagaku Kogyo Co., Ltd. as an oxygen ion conducting material powder, 3 parts by mass of ethyl cellulose as a binder, and 30 parts by mass of $\alpha$-terpineol as a solvent were mixed in a mortar. Then, the mixture was kneaded in a three-roll mill (Model "M-80S", manufactured by EXAKT Technologies, Inc., roll material: alumina). Thus, a paste for the first cathode layer was obtained.

(Preparation of paste for second cathode layer)

The paste for the second cathode layer was prepared in the same manner as the paste for the first cathode layer except that only the second powder material was used as a powder.

(Formation of first cathode layer and second cathode layer)

A half cell according to Example 4 configured in the same manner as in Example 1 except that the formation of the barrier layer 30 was omitted was fabricated. The paste for the first cathode layer was applied to a square area of 1 cm $\times$ 1 cm on the surface of the first electrolyte layer of the half cell by screen printing so that a layer with a thickness of about 8 $\mu$m could be formed after firing, followed by drying at 90°C for 1 hour. Thus, a green layer for the first cathode layer was formed. Then, the paste for the second cathode layer was applied to a square area of 1 cm $\times$ 1 cm on the green layer for the first cathode layer by screen printing so that a layer with a thickness of about 26 $\mu$m could be formed after firing, followed by drying at 90°C for 1 hour. Thus, a green layer for the second cathode layer was formed. Then, the stack of the two green layers was fired at 1150°C for 2 hours. Thus, a SOFC cell according to Example 4 was fabricated. The ratio of the thickness of the first cathode layer T1 to the thickness of the second cathode layer T2 in the SOFC cell according to Example 4 was 0.298 (T1 = 7.6 $\mu$m, T2 = 25.5 $\mu$m). The first cathode layer of the SOFC cell according to Example 4 consists of 50 mass% of LSM and 50 mass% of ScSZ as an oxygen ion conducting material. The second cathode layer of the SOFC cell according to Example 4 contains no ScSZ and consists only of LSM.

<Example 5>

Example 5 having a configuration shown in FIG. 5 including a first electrolyte layer and a second electrolyte layer is described.

(Preparation of green sheet for anode support substrate)

A green sheet for the anode support substrate was prepared in the same manner as in Example 1.

(Preparation of paste for anode functional layer)

36 parts by mass of nickel oxide (manufactured by Kishida Chemical Co., Ltd.) as a conductive component, 24 parts by mass of 10 mol% yttria-stabilized zirconia (10YSZ) (Product name: "HSY-10", manufactured by Daiichi Kigenso Kagaku Kogyo Co., Ltd.) as an electrolyte component, 2 parts by mass of carbon black (SGP-3, manufactured by SEC Carbon, Ltd.) as a pore forming agent, 36 parts by mass of $\alpha$-terpineol (manufactured by Wako Pure Chemical Industries, Ltd.) as a solvent, 4 parts by mass of ethyl cellulose (manufactured by Wako Pure Chemical Industries, Ltd.) as a binder, 6 parts by mass of dibutyl phthalate (manufactured by Wako Pure Chemical Industries, Ltd.) as a plasticizer, and 4 parts by mass of a sorbitan fatty acid ester surfactant as a dispersant were mixed in a mortar, and then the mixture was disintegrated in a three-roll mill (Model "M-80S", manufactured by EXAKT Technologies, Inc., roll material: alumina). Thus, a paste for the anode functional layer was obtained. As a result of composition analysis by ICP (inductively coupled plasma), the content of yttria in the 10YSZ was 10.04 mol%.

(Preparation of paste for first electrolyte layer)

60 parts by mass of 10 mol% yttria-stabilized zirconia (10YSZ) (Product name: "HSY-10", manufactured by Daiichi Kigenso Kagaku Kogyo Co., Ltd.), 5 parts by mass of ethyl cellulose (manufactured by Wako Pure Chemical Industries, Ltd.) as a binder, 40 parts by mass of $\alpha$-terpineol (manufactured by Wako Pure Chemical Industries, Ltd.) as a solvent, 6 parts by mass of dibutyl phthalate (manufactured by Wako Pure Chemical Industries, Ltd.) as a plasticizer, and 5 parts by mass of sorbitan acid ester surfactant (Product name "Ionet S-80", manufactured by Sanyo Chemical Industries, Ltd.) as a dispersant were mixed in a mortar, and then the mixture was disintegrated in a three-roll mill (Model "M-80S", manufactured by EXAKT Technologies, Inc., roll material: alumina). Thus, a paste for the first electrolyte layer was prepared. As a result of composition analysis by ICP (inductively coupled plasma), the content of yttria in the 10YSZ was 10.04 mol%.

(Preparation of paste for second electrolyte layer)

60 parts by mass of 10 mol% scandia 1 mol% ceria-stabilized zirconia (10Sc1CeSZ) (Product name: "10Sc1CeSZ", manufactured by Daiichi Kigenso Kagaku Kogyo Co., Ltd.), 5 parts by mass of ethyl cellulose (manufactured by Wako Pure Chemical Industries, Ltd.) as a binder, 40 parts by mass of $\alpha$-terpineol (manufactured by Wako Pure Chemical Industries, Ltd.) as a solvent, 6 parts by mass of dibutyl phthalate (manufactured by Wako Pure Chemical Industries, Ltd.) as a plasticizer, and 5 parts by mass of sorbitan acid ester surfactant (Product name "Ionet S-80", manufactured by Sanyo Chemical Industries, Ltd.) as a dispersant were mixed in a mortar, and then the mixture was disintegrated in a three-roll mill (Model "M-80S", manufactured by EXAKT Technologies, Inc., roll material: alumina). Thus, a paste for the second electrolyte layer was obtained.

(Preparation of paste for barrier layer)

60 parts by mass of 10 mol% gadolinia-doped ceria powder (manufactured by Anan Kasei Co., Ltd.), 5 parts by mass of ethyl cellulose (manufactured by Wako Pure Chemical Industries, Ltd.) as a binder, 40 parts by mass of $\alpha$-terpineol (manufactured by Wako Pure Chemical Industries, Ltd.) as a solvent, 6 parts by mass of dibutyl phthalate (manufactured by Wako Pure Chemical Industries, Ltd.) as a plasticizer, and 5 parts by mass of sorbitan acid ester surfactant (Product name "Ionet S-80", manufactured by Sanyo Chemical Industries, Ltd.) as a dispersant were mixed in a mortar, and then the mixture was disintegrated in a three-roll mill (Model "M-80S", manufactured by EXAKT Technologies, Inc., roll material: alumina). Thus, a paste for the barrier layer was obtained.

(Formation of green layer for anode functional layer)

The paste for the anode functional layer was printed on the above-described green sheet for the anode support substrate by screen printing so that a layer with a thickness of about 20 $\mu$m could be formed after firing, followed by drying at 100°C for 30 minutes. Thus, a green layer for the anode functional layer was formed.

(Formation of green layers for electrolyte layers)

The paste for the first electrolyte layer was printed on the above-described green layer for the anode functional layer by screen printing so that a layer with a thickness of about 2 $\mu$m could be formed after firing. Then, on the layer thus formed, the paste for the second electrolyte layer was printed by screen printing so that a layer with a thickness of about 10 $\mu$m could be formed after firing, followed by drying at 100°C for 30 minutes. Thus, a green layer for the first electrolyte layer and a green layer for the second electrolyte layer were formed. Herein, the green layer fomed from the paste for the first electrolyte layer is the green layer for the first electrolyte layer, and the green layer formed from the paste for the second electrolyte layer is the green layer for the second electrolyte layer.

(Formation of green layer for barrier layer)

The above-described paste for the barrier layer was printed on the green layer for the second electrolyte layer by screen printing so that a layer with a thickness of 3 $\mu$m or less could be formed after firing. The paste was dried at 100°C for 30 minutes. Thus, a green layer for the barrier layer was formed.

(Firing)

A square piece was punched from the stack of the green sheet for the anode substrate, the green layer for the anode functional layer, the green layer for the first electrolyte layer, the green layer for the second electrolyte layer, and the green layer for the barrier layer thus formed so that each side of the square piece would be 60 mm after firing. After punching, the square piece was fired at 1300°C for 2 hours. Thus, a half cell including a barrier layer according to Example 5 was obtained.

(Preparation of LSCF powder material)

In order to prepare a powder material as a raw material for a LSCF cathode, commercially available 99.9% pure $La_2O_3$ powder, 99.9% pure $SrCO_3$ powder, 99% pure $CoO$ powder, and 99% pure $Fe_2O_3$ powder were mixed to obtain a mixture with an elemental composition of $La_{0.6}Sr_{0.4}Co_{0.2}Fe_{0.8}$. Ethanol was added to the resulting mixture, followed by grinding and mixing in a bead mill for 1 hour. Next, the resulting mixture was dried and then calcined at 800°C for 1 hour. Ethanol was further added to the calcined mixture, followed by grinding and mixing in a bead mill for 1 hour and then drying. Then, the mixture was subjected to a solid-phase reaction at 1200°C for 5 hours to obtain a powder. Ethanol was added to this powder, followed by grinding and mixing in a ball mill for 10 hours and then drying to obtain a powder. It was confirmed by X-ray diffraction that this powder is a single perovskite phase. Then, the powder was ground in a planetary ball mill at a controlled rotation speed and a controlled rotation time. Thus, a LSCF powder having an average particle diameter (D50) of 0.52 $\mu$m was obtained. In this description, the average particle diameter (D50) refers to a particle diameter corresponding to the cumulative volume percentage of 50% in the particle size distribution measured by laser diffraction particle size distribution measurement.

(Preparation of paste for cathode)

100 parts by mass of the above-mentioned LSCF powder, 3 parts by mass of ethyl cellulose as a binder, and 30 parts by mass of $\alpha$-terpineol as a solvent were put into a mortar and mixed therein. Then, the mixture was kneaded in a three-roll mill (Model "M-80S", manufactured by EXAKT Technologies, Inc., roll material: alumina). Thus, a paste for the cathode was obtained.

(Formation of cathode)

The above-mentioned paste for the cathode was applied to a square area of 1 cm $\times$ 1 cm on the barrier layer of the above-described half cell by screen printing, followed by drying at 90°C for 1 hour to form a green layer for the cathode. This green layer for the cathode was fired at 1000°C for 2 hours. Thus, a SOFC cell of Example 5 was obtained.

<Example 6>

A SOFC cell of Example 6 was fabricated in the same manner as in Example 5, except that the conditions for printing the green layer for the first electrolyte layer and the green layer for the second electrolyte layer were changed so that both the thickness of the fired green layer for the second electrolyte layer and the thickness of the fired green layer for the first electrolyte layer would be about 5 $\mu$m.

<Example 7>

A SOFC cell of Example 7 was fabricated in the same manner as in Example 5, except that the printing conditions were changed so that the thickness of the fired green layer for the first electrolyte layer would be about 1 $\mu$m and the thickness of the fired green layer for the second electrolyte layer would be about 10 $\mu$m.

<Example 8>

A SOFC cell of Example 8 was fabricated in the same manner as in Example 7, except that nickel oxide and 10 mol% yttria-stabilized zirconia powder were subjected to mixing/grinding treatment in a ball mill in the preparation of the paste for the anode functional layer and the treated powder mixture was used to prepare the paste for the anode functional layer.

<Reference Example 1>

A SOFC cell of Reference Example 1 including an electrolyte layer having a single-layer structure consisting of the first electrolyte layer was fabricated in the same manner as in Example 5, except that the printing conditions were changed so that the thickness of the fired green layer for the first electrolyte layer would be about 10 $\mu$m and the printing

of the paste for the second electrolyte layer was omitted.

<Reference Example 2>

A SOFC cell of Reference Example 2 was fabricated in the same manner as in Example 4, except that the paste application for forming the second cathode layer in Example 4 was not performed.

<Comparative Example 1>

A half cell according to Comparative Example 1 and a SOFC cell according to Comprative Example 1 were fabricated in the same manner as in Example 1, except that as the material for the electrolyte component in the anode functional layer and the material for the first electrolyte layer, 8 mol%-yttria-stabilized zirconia powder (8YSZ) (Product name "HSY-8", manufactured by Daiichi Kigenso Kagaku Kogyo Co., Ltd.) was used instead of the material used in Example 1. As a result of composition analysis by ICP (inductively coupled plasma), the yttria content in the 8YSZ was 7.97 mol%.

<Comparative Example 2>

A half cell according to Comparative Example 2 and a SOFC cell according to Comprative Example 2 were fabricated in the same manner as in Example 1, except that 8 mol% yttria-stabilized zirconia powder (8YSZ) (Product name "HSY-8", manufactured by Daiichi Kigenso Kagaku Kogyo Co., Ltd.) was used for the anode functional layer instead of 10YSZ. As a result of composition analysis by ICP (inductively coupled plasma), the yttria content in the 8YSZ was 7.97 mol%.

<Comparative Example 3>

A half cell according to Comparative Example 3 and a SOFC cell according to Comprative Example 3 were fabricated in the same manner as in Example 1, except that 12.01 mol% yttria-stabilized zirconia powder (12YSZ) was used for the anode functional layer instead of 10YSZ.

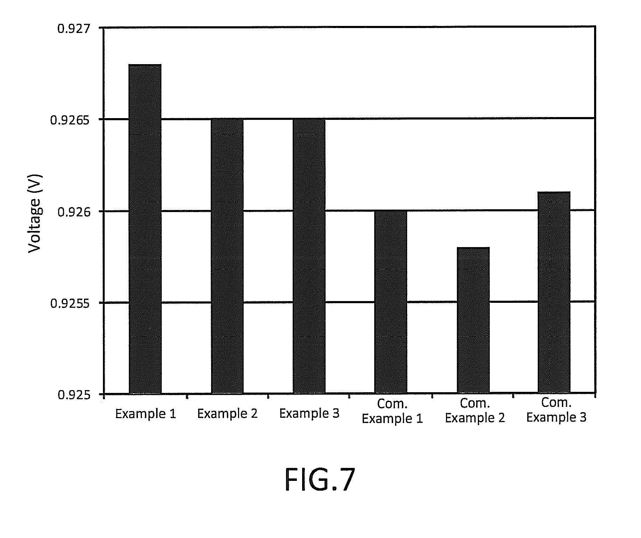

For the SOFC cells according to Examples 1 to 3 and the SOFC cells according to Comparative Examples 1 to 3, a cell performance evaluation test was performed. FIG. 7 shows the results. As shown in FIG. 7, the voltages of the SOFC cells according to Examples 1 to 3 at a current density of 0.36 A/cm$^2$ were higher than the voltages of the SOFC cells according to Comparative Examples 1 to 3 at a current density of 0.36 A/cm$^2$.

For each of the half cells according to Examples 1 to 3 and the half cells according to Comparative Examples 1 to 3, Table 1 shows the calculation results of the degree of separation of the conductive component from the electrolyte component in the anode functional layer and the degree of interfacial separation of the conductive component from the electrolyte component at the interface between the first electrolyte layer and the anode functional layer. In the table below, the degree of separation refers to the degree of separation of the conductive component from the electrolyte component in the anode functional layer. The degree of interfacial separation refers to the degree of interfacial separation of the conductive component in the anode functional layer from the electrolyte component in the first electrolyte layer at the interface between the first electrolyte layer and the anode functional layer.

Table 1

| | Yttria content (electrolyte layer) [mol%] | Yttria content (Anode functional layer) [mol%] | Degree of separation [%] | Degree of interfacial separation [%] |
|---|---|---|---|---|
| Example 1 | 10.04 | 10.04 | 6.6 | 3.2 |
| Example 2 | 9.10 | 9.10 | 7.8 | 4.2 |
| Example 3 | 10.98 | 10.98 | 7.9 | 5.0 |
| Com. Example 1 | 7.97 | 7.97 | 12 | 13 |
| Com. Example 2 | 10.04 | 7.97 | 12 | 17 |

(continued)

| | Yttria content (electrolyte layer) [mol%] | Yttria content (Anode functional layer) [mol%] | Degree of separation [%] | Degree of interfacial separation [%] |
|---|---|---|---|---|
| Com. Example 3 | 10.04 | 12.01 | 11 | 18 |

In each of the half cells according to Examples 1 to 3, the degree of separation of the conductive component from the electrolyte component in the anode functional layer and the degree of interfacial separation of the conductive component in the anode functional layer from the electrolyte component in the first electrolyte layer at the interface between the first electrolyte layer and the anode functional layer were less than 10%. However, in each of the half cells according to Comparative Examples 1 to 3, the degree of separation and the degree of interfacial separation were more than 10%.

As shown in FIG. 7, the SOFC cells according to Examples 1 to 3 exhibited higher power generation performance than the SOFC cells according to Comparative Examples 1 to 3, although the oxygen ion conductivities of 9.10YSZ, 10.04YSZ, and 10.98YSZ are lower than the oxygen ion conductivity of 8YSZ. These results suggest that in Examples 1 to 3, the separation of the conductive component from the electrolyte component in the anode functional layer and the separation of the conductive component from the electrolyte layer at the interface between the electrolyte layer and the anode functional layer were suppressed to a greater extent than in Comparative Examples 1 to 3. In fact, Table 1 shows that the degrees of separation and the degrees of interfacial separation in the half cells according to Examples 1 to 3 were less than 10%, which were lower than those in the half cells according to Comparative Examples 1 to 3.

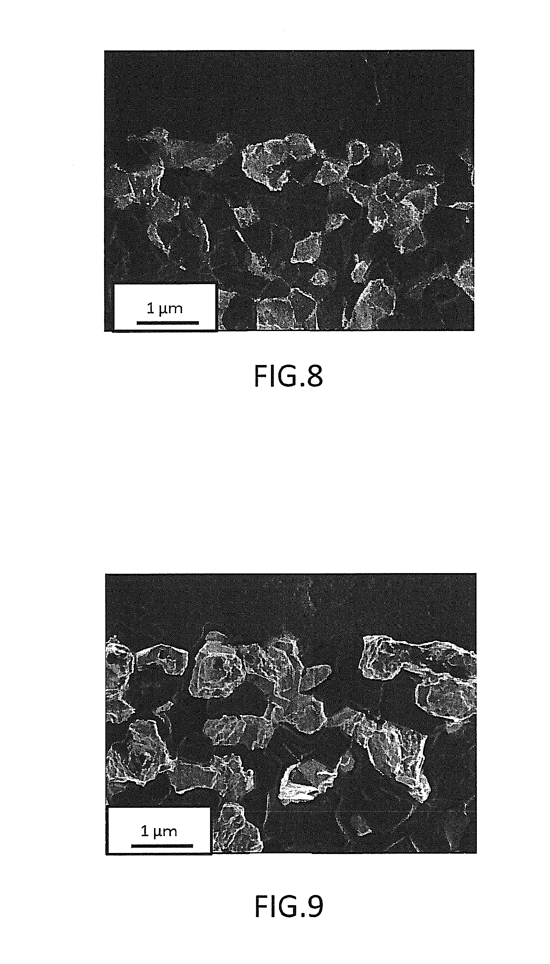

FIG. 8 shows a SEM photograph of the cross section of the half cell according to Example 1 which has been subjected to hydrogen reduction treatment. FIG. 9 shows a SEM photograph of the cross section of the half cell according to Comparative Example 1 which has been subjected to hydrogen reduction treatment.

The voltage decay rate of the SOFC cell of Example 4 having a two-layer cathode structure (41 and 42) shown in FIG. 3 was 0.01%, and the voltage decay rate of the SOFC cell of Reference Example 2 was 1.21%. This result suggests that a SOFC cell having a two-layer cathode structure has high durability.

The above-described cell performance evaluation test was performed on each of the SOFC cells according to Examples 5 to 8 and Reference Example 1, and the power density (W/cm$^2$) at 0.8 V was obtained. In addition, the thickness of the first electrolyte layer and the thickness of the second electrolyte layer were measured, and the ratio of the thickness of the second electrolyte layer to the total thickness of the first electrolyte layer and the second electrolyte layer was calculated. Table 2 shows these results.

The power densities of the SOFC cells of Examples 5 to 8 were higher than the power density of the SOFC cell of Reference Example 1, which reveals that a SOFC cell including the second electrolyte layer in addition to the first electrolyte layer has an improved power density and thus has higher power generation performance.

Table 2

| | Thickness of first electrolyte layer [$\mu$m] | Thickness of second electrolyte layer [$\mu$m] | Ratio of thickness of second electrolyte layer to total thickness of first electrolyte layer and second electrolyte layer [%] | Power density [W/cm$^2$] |
|---|---|---|---|---|
| Example 5 | 1.9 | 10.0 | 84 | 0.760 |
| Example 6 | 5.4 | 5.3 | 50 | 0.719 |
| Example 7 | 1.3 | 9.8 | 88 | 0.763 |
| Example 8 | 1.4 | 10.2 | 88 | 0.769 |
| Ref. Example 1 | 10.1 | - | - | 0.671 |

**Claims**

1. A half cell for a solid oxide fuel cell, comprising:

an anode functional layer comprising yttria-stabilized zirconia and a conductive component containing a metal oxide that changes to an electrically conductive metal in a reducing atmosphere; and
a first electrolyte layer comprising yttria-stabilized zirconia as a main component and formed on one principal surface of the anode functional layer, wherein
the yttria-stabilized zirconia in the anode functional layer has an yttria content of more than 9.00 mol% and 11 mol% or less, and the yttria-stabilized zirconia in the first electrolyte layer has an yttria content of more than 9.00 mol% and 11 mol% or less.

2. The half cell for a solid oxide fuel cell according to claim 1, wherein when the half cell for a solid oxide fuel cell is placed for 4 hours in an electric furnace with a mixed gas atmosphere containing $H_2$ and $N_2$ in a volume ratio of 1:9 at a pressure of 1 atm and a temperature of 750°C, a degree of separation of the conductive component from the yttria-stabilized zirconia in the anode functional layer is 10% or less.

3. The half cell for a solid oxide fuel cell according to claim 1 or 2, wherein when the half cell for a solid oxide fuel cell is placed for 4 hours in an electric furnace with a mixed gas atmosphere containing $H_2$ and $N_2$ in a volume ratio of 1:9 at a pressure of 1 atm and a temperature of 750°C, a degree of interfacial separation of the conductive component from the yttria-stabilized zirconia in the first electrolyte layer is 10% or less.

4. The half cell for a solid oxide fuel cell according to any one of claims 1 to 3, wherein the metal oxide is nickel oxide.

5. The half cell for a solid oxide fuel cell according to claim 4, further comprising a second electrolyte layer comprising scandia-stabilized zirconium as a main component and formed on a principal surface of the first electrolyte opposite to a principal surface thereof on which the anode functional layer is formed.

6. The half cell for a solid oxide fuel cell according to claim 5, wherein a thickness of the second electrolyte layer is 30% or more of a total thickness of the first electrolyte layer and the second electrolyte layer.

7. A solid oxide fuel cell comprising:

the half cell for a solid oxide fuel cell according to any one of claims 1 to 6; and
a cathode formed on an opposite side of the first electrolyte layer from the anode functional layer.

8. The solid oxide fuel cell according to claim 7, wherein
the cathode comprises a first cathode layer disposed on or above the first electrolyte layer and a second cathode layer disposed on the first cathode layer on an opposite side of the first cathode layer from the first electrolyte layer,
the first cathode layer comprises lanthanum strontium manganite that is an oxide with an elemental composition of $(La_xSr_{1-x})_{1-a}Mn$, where x is in a range of 0.5 to 0.9 and a is in a range of 0.0 to 0.2, and
the second cathode layer comprises, as a main component, lanthanum strontium manganite that is an oxide with an elemental composition of $(La_xSr_{1-x})_{1-a}Mn$, where x is in a range of 0.5 to 0.9 and a is in a range of 0.0 to 0.2.

9. The solid oxide fuel cell according to claim 8, wherein
the first cathode layer further comprises, as an oxygen ion conducting material, scandia-stabilized zirconia or scandia-stabilized zirconia doped with a metal oxide, and
a content of an oxygen ion conducting material in the second cathode layer is lower than a content of the oxygen ion conducting material in the first cathode layer.

FIG.1

FIG.2

FIG.3

FIG.4

2c

40a

1c

FIG.5

2d

42
40b
41

22

21

1d

11

12

FIG.6

FIG.7

FIG.8

FIG.9

## INTERNATIONAL SEARCH REPORT

| International application No. |
| --- |
| PCT/JP2013/005796 |

A. CLASSIFICATION OF SUBJECT MATTER
*H01M8/02*(2006.01)i, *H01M4/88*(2006.01)i, *H01M8/12*(2006.01)i

According to International Patent Classification (IPC) or to both national classification and IPC

B. FIELDS SEARCHED

Minimum documentation searched (classification system followed by classification symbols)
H01M8/02, H01M4/88, H01M8/12

Documentation searched other than minimum documentation to the extent that such documents are included in the fields searched
Jitsuyo Shinan Koho          1922–1996   Jitsuyo Shinan Toroku Koho   1996–2013
Kokai Jitsuyo Shinan Koho    1971–2013   Toroku Jitsuyo Shinan Koho   1994–2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 10-326623 A  (Murata Mfg. Co., Ltd.),<br>08 December 1998 (08.12.1998),<br>claim 2; paragraphs [0012], [0024]<br>(Family: none) | 1-4,7<br>5,6,8<br>9 |
| X<br>Y<br>A | JP 2003-510788 A  (Ceramic Fuel Cells Ltd.),<br>18 March 2003 (18.03.2003),<br>paragraphs [0046], [0047]<br>& EP 1236236 A          & WO 01/024300 A1<br>& CA 2386059 A | 1-4,7<br>5,6,8<br>9 |
| Y | JP 2004-259691 A  (Toto Ltd.),<br>16 September 2004 (16.09.2004),<br>claims 1, 3, 4, 5; paragraphs [0007], [0082],<br>[0088]<br>(Family: none) | 5,6,8 |

[X] Further documents are listed in the continuation of Box C.          [ ] See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    20 November, 2013 (20.11.13) | Date of mailing of the international search report<br>    24 December, 2013 (24.12.13) |
| --- | --- |
| Name and mailing address of the ISA/<br>    Japanese Patent Office | Authorized officer |
| Facsimile No. | Telephone No. |

Form PCT/ISA/210 (second sheet) (July 2009)

26

**INTERNATIONAL SEARCH REPORT**

International application No.

PCT/JP2013/005796

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 8-180885 A (Tokyo Gas Co., Ltd.),<br>12 July 1996 (12.07.1996),<br>claims 1, 2, 3; paragraphs [0009], [0012]<br>(Family: none) | 8 |
| Y | JP 9-50814 A (Nippon Telegraph and Telephone Corp.),<br>18 February 1997 (18.02.1997),<br>claim 1; paragraphs [0004], [0009], [0011];<br>fig. 1<br>(Family: none) | 8 |

Form PCT/ISA/210 (continuation of second sheet) (July 2009)

**EP 2 903 067 A1**

## REFERENCES CITED IN THE DESCRIPTION

**Patent documents cited in the description**

- JP 2011228093 A
- JP 2006505094 T
- JP 2012104407 A